# EUROPÄISCHE PATENTSCHRIFT

(11) **EP 3 143 299 B1**
(45) Veröffentlichungstag und Bekanntmachung des Hinweises auf die Patenterteilung: **14.03.2018**
(21) Anmeldenummer: 15728416.7
(22) Anmeldetag: 16.04.2015
(51) Int. Cl.: F16D 3/12, F16D 3/64, F16D 41/00, F16D 3/66, F16H 55/36

(54) **VORRICHTUNG ZUR DREHSCHWINGUNGSGEDÄMPFTEN ÜBERTRAGUNG EINES DREHMOMENTS**
DEVICE FOR THE TRANSMISSION OF A TORQUE WITH TORSIONAL VIBRATION DAMPING
DISPOSITIF DE TRANSMISSION D'UN COUPLE DE ROTATION AVEC AMORTISSEMENT DES VIBRATIONS DE TORSION

(30) Priorität: 16.05.2014 DE 202014102314 U; 14.11.2014 DE 202014105486 U
(43) Veröffentlichungstag der Anmeldung: 22.03.2017
(73) Patentinhaber: Rollax GmbH & Co. Kg, 32107 Bad Salzuflen (DE)
(72) Erfinder: EBKE, Andreas, 32429 Minden (DE)
(74) Vertreter: Ter Meer Steinmeister & Partner
(86) Internationale Anmeldenummer: PCT/EP2015/058335
(87) Internationale Veröffentlichungsnummer: WO 2015/172967

(56) Entgegenhaltungen:
- WO-A1-2004/011818
- WO-A1-2011/127898
- DE-A1-102009 014 203

## Beschreibung

Die Erfindung betrifft eine Vorrichtung zur drehschwingungsgedämpften Übertragung eines Drehmoments, mit einem Drehmomentübertragungsring, einer Freilaufkupplung und einem Dämpfungselement, das koaxial zu der Freilaufkupplung angeordnet ist und mit dieser in Antriebsverbindung steht.

Vorrichtungen dieser Art werden beispielsweise in Kraftfahrzeugen zum Antrieb von Nebenaggregaten wie Lichtmaschine, Klimakompressor, etc. eingesetzt. Durch die Freilaufkupplung wird das Drehmoment in einem Drehsinn von einem Antriebselement, beispielsweise einer Riemenscheibe, über das Dämpfungselement auf ein Abtriebselement übertragen, beispielsweise auf eine Welle der Lichtmaschine. Das Dämpfungselement dient zur Dämpfung von Drehschwingungen und Stößen, die durch Gleichlaufschwankungen des Antriebselements und besondere Motorbetriebszustände angeregt werden können und leicht zu einem erhöhten Verschleiß der Freilaufkupplung führen können.

Aus DE 10 2009 014 203 A1 ist eine Vorrichtung dieser Art bekannt, bei der das Dämpfungselement die Freilaufkupplung ringförmig umgibt und durch einen Energiespeicher in der Form eines Kranzes von Schraubendruckfedern oder wahlweise auch in der Form eines torsionsverformbaren Dämpfungsringes aus elastomerem Material gebildet wird.

Aufgabe der Erfindung ist es, die Dämpfungseigenschaften einer solchen Vorrichtung zu verbessern und Resonanzeffekte weitestgehend zu vermeiden.

Diese Aufgabe wird erfindungsgemäß dadurch gelöst, dass das Dämpfungselement mindestens einen Dämpfungskörper in der Form eines räumlichen Maschenwerkes aus Draht aufweist, der zwischen dem Drehmomentübertragungsring und der Freilaufkupplung angeordnet ist und in Umfangsrichtung an dem Drehmomentübertragungsring und der Freilaufkupplung abgestützt ist.

Der Dämpfungskörper kann in der Form eines Gewirkes oder Gestricks aus Metalldraht hergestellt werden, das zumindest annähernd die gewünschte Form aufweist und dann beispielsweise durch Formpressen in die gewünschte endgültige Gestalt gebracht werden kann. Dabei stellt das Formpressen zugleich eine einfache Möglichkeit dar, die Dichte des Maschenwerkes und damit die Verformungssteifigkeit und Progressivität der Federkennlinie je nach Bedarf einzustellen. Dieser Dämpfungskörper zeichnet sich durch eine hohe Haltbarkeit insbesondere eine hohe chemische Beständigkeit und Temperaturbeständigkeit aus und weist aufgrund der hohen inneren Reibung ausgezeichnete Dämpfungseigenschaften auf. Die Schwingungsdämpfung kann dabei schon bei einer verhältnismäßig geringen Verformung des Dämpfungskörpers erreicht werden, wodurch bei den wechselnden Beanspruchungen eine Materialermüdung vermieden wird und somit auch eine hohe Standzeit bei sehr geringen Setzungserscheinungen erreicht wird.

Da der Dämpfungskörper zwischen zwei ringförmigen Bauteilen angeordnet und in Umfangsrichtung abgestützt ist, wird eine kompakte Anordnung und eine unmittelbare Drehmomentübertragung erreicht, wobei die Dämpfungswirkung durch leichte elastische und damit reversible Stauchung des Dämpfungskörpers in Umfangsrichtung erreicht wird. Die Verformung und Rückverformung des Dämpfungskörpers ist dabei zwar elastisch, zehrt jedoch aufgrund der Reibung zwischen den einzelnen Maschen des Maschenwerkes ein hohes Maß an Energie auf, wodurch Drehschwingungen wirksam gedämpft werden.

Vorteilhafte Weiterbildungen und Ausgestaltungen der Erfindung sind in den Unteransprüchen angegeben.

In einer Ausführungsform ist das Dämpfungselement in Umfangsrichtung formschlüssig zwischen radial von dem Drehmomentübertragungsring einerseits und der Freilaufkupplung andererseits vorspringenden Rippen gehalten.

Die Übertragung des Drehmoments kann vom Drehmomentübertragungsring über das Dämpfungselement auf die Freilaufkupplung erfolgen oder wahlweise auch in umgekehrter Richtung.

In einer vorteilhaften Ausführungsform wird das Dämpfungselement durch einen oder mehrere Dämpfungskörper gebildet, die ringförmig um einen Außenring der Freilaufkupplung herum angeordnet sind. Beispielsweise können vier getrennte Dämpfungskörper vorgesehen sein, die sich jeweils etwa über ein Viertel des Umfangs der Freilaufkupplung erstrecken und durch eine abwechselnde Folge von nach innen vorspringenden Rippen des Drehmomentübertragungsrings und nach außen vorspringenden Rippen der Freilaufkupplung voneinander getrennt werden.

Alternativ lassen sich die Dämpfungselemente auch ohne vorspringende Rippenstrukturen, beispielsweise durch Schweißung fest mit dem Innendurchmesser des Drehmomentübertragungsringes und dem Außenring der Freilaufkupplung verbinden.

Wahlweise ist auch eine Ausführungsform möglich, bei welcher das Dämpfungselement durch einen einteiligen ringförmigen Dämpfungskörper gebildet wird, der am inneren und am äußeren Umfang radiale Nuten zur Aufnahme der Rippen des Drehmomentübertragungsringes und der Freilaufkupplung aufweist. In diesem Fall kann der Dämpfungskörper wahlweise auch zur Dämpfung von Radialschwingungen genutzt werden.

In einer weiteren Ausführungsform, insbesondere bei Drehmomentübertragungsringen in der Form von Riemenscheiben mit sehr kleinem Wirkdurchmesser, kann die radiale Anordnung der Dämpfungskörper auch axial nach außen in einen Bereich jenseits der Riemenprofilierung verschoben sein.

Es ist auch möglich, die Dämpfungskörper aus einem Draht-Maschenwerk mit elastischen Dämpfungselementen wie beispielsweise Schraubenfedern, Tellerfedern und/oder Blattfedern oder auch Gummiblöcken zu kombinieren. Beispielsweise können das Maschenwerk und die elastischen Dämpfungselemente in Reihe angeordnet sein, so dass, beispielsweise bei einem Kraftfluss vom Drehmomentübertragungsring auf die Freilaufkupplung, die Kraft des Drehmomentübertragungsringes zunächst auf die elastischen Dämpfungselemente wirkt und diese dann die Kraft über das Maschenwerk auf die Freilaufkupplung übertragen oder umgekehrt die in Umfangsrichtung wirkende Kraft des Drehmomentübertragungsrings zunächst auf das Maschenwerk wirkt und dieses dann die Kraft über die elastischen Dämpfungselemente auf die Freilaufkupplung überträgt. In diesen Fällen erlauben die elastischen Dämpfungselemente einen größeren Federweg, während durch das Maschenwerk eine wirksamere Schwingungsdämpfung erreicht wird.

In einer anderen Ausführungsform können das Maschenwerk und die elastischen Dämpfungselemente auch parallel angeordnet sein, so dass zwei parallele Kraftübertragungspfade gebildet werden. In diesem Fall wird durch die elastischen Dämpfungselemente eine gewisse Druckentlastung des Maschenwerkes erreicht.

Im folgenden werden ein Ausführungsbeispiele anhand der Zeichnung näher erläutert.

Es zeigen:
- Fig. 1: einen axialen Schnitt durch eine erfindungsgemäße Vorrichtung zur Drehmomentübertragung;
- Fig. 2: einen Querschnitt in der Ebene II-II in Fig. 1;
- Fig. 3: einen axialen Schnitt durch eine Vorrichtung mit alternativer Anordnung der Dämpfungskörper;
- Fig. 4: einen Querschnitt in der Ebene IV-IV in Fig. 3;
- Fig. 5: eine Schnittdarstellung analog zu Fig. 2, für eine andere Ausführungsform; und
- Fig. 6 und 7: Schnittdarstellungen analog zu Fig. 4, für weitere Ausführungsformen der Erfindung.

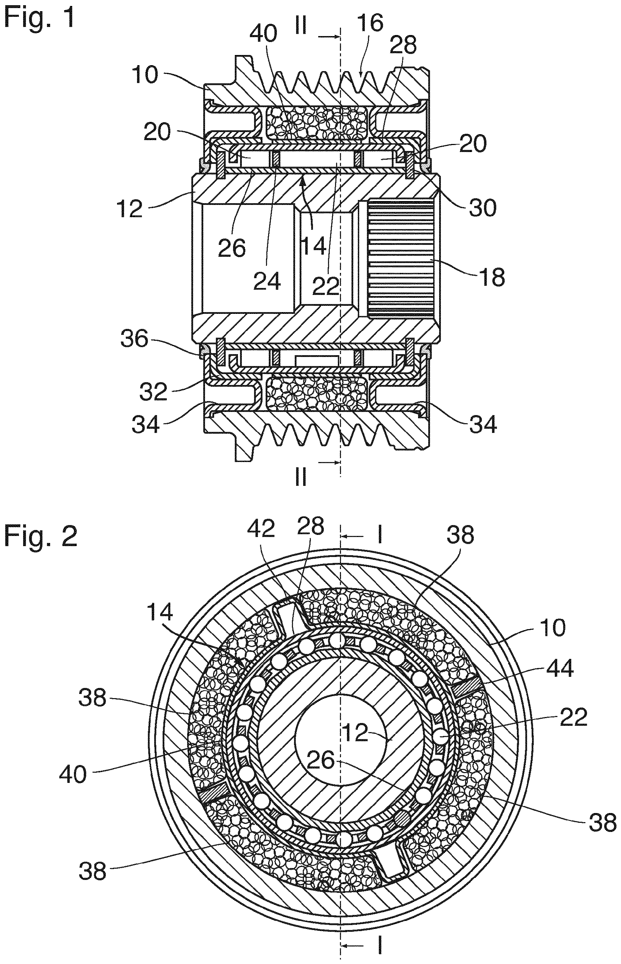

Die in Fig. 1 gezeigte Vorrichtung dient zur Übertragung eines Drehmoments von einem äußeren Drehmomentübertragungsring 10 auf eine innere Hülse 12 und weist eine Freilaufkupplung 14 sowie ein Dämpfungselement 16 auf, die radial zwischen dem Drehmomentübertragungsring 10 und der Hülse 12 angeordnet sind. Im gezeigten Beispiel ist der Drehmomentübertragungsring 10 als Keilriemenscheibe ausgebildet, die durch einen nicht gezeigten Keilrippenriemen angetrieben wird. Die Hülse 12 weist eine Innenverzahnung 18 auf, mit der sie mittels eines gesonderten Werkzeuges auf eine nicht gezeigte Welle eines Nebenaggregates wie z. B. einer Lichtmaschine montiert werden kann.

Die Freilaufkupplung 14 wird auf beiden Seiten durch Wälzlager mit Wälzkörpern 20 in der Form von Zylinderrollen flankiert und weist Klemmrollen 22 auf, die in einem Käfig 24 gehalten sind. Ein Innenring 26 der Freilaufkupplung bildet eine gemeinsame Laufbahn für die Klemmrollen 22 und die Wälzkörper 20 und weist im Bereich der Klemmrollen 22 eine Klemmkontur auf, die in Fig. 2 zu erkennen ist. Ein Außenring 28 der Freilaufkupplung bildet ebenfalls eine gemeinsame Laufbahn für die Klemmrollen 22 und die Wälzkörper 20 und ist an beiden axialen Enden einwärts gekröpft, so dass er die Wälzkörper 20 übergreift.

Der Innenring 26 sitzt drehfest auf der Hülse 12 und ist an beiden Enden durch Sicherungsringe 30 auf der Hülse 12 fixiert. Die Sicherungsringe 30 werden jeweils von einer im axialen Schnitt L-förmigen Gleitlagerhülse 32 übergriffen, die von einer trogförmigen Blechstruktur 34 umgeben ist, die im axialen Schnitt eine (liegend) U-förmige Gestalt hat. Der innere Schenkel der Blechstruktur 34 ist einwärts gekröpft und trägt eine Dichtung 36, die am Umfang der Hülse 12 abdichtet. Die äußeren Schenkel der beiden Blechstrukturen 34 stützen den Drehmomentübertragungsring 10 an beiden Enden ab. In radialer Richtung wird so der Drehmomentübertragungsring 10 über die Blechstrukturen 34 und die Gleitlagerhülsen 32 auf dem Außenring 28 der Freilaufkupplung und der Wälzlager abgestützt und gleichzeitig axial gesichert, während er sich in Umfangsrichtung frei drehen kann, lediglich begrenzt durch die elastische Einfederung des Dämpfungselements 16.

Wie deutlicher in Fig. 2 zu erkennen ist, wird das Dämpfungselement 16 durch vier getrennte, jeweils etwa viertelkreisförmige Dämpfungskörper 38 gebildet, die in radialer Richtung den Zwischenraum zwischen dem Drehmomentübertragungsring 10 und der Freilaufkupplung 14 ausfüllen. Die äußere Hülle der Freilaufkupplung wird durch einen Mitnehmerring 40 gebildet, der zwei einander diametral gegenüberliegende Ausstülpungen oder Rippen 42 bildet, die je zwei benachbarte Dämpfungskörper 38 voneinander trennen.

Am Drehmomentübertragungsring 10 sind am inneren Umfang zwei radial nach innen vorspringende Rippen 44 befestigt, die ebenfalls jeweils zwei benachbarte Dämpfungskörper 38 voneinander trennen. Die Dämpfungskörper 38 sind somit in Umfangsrichtung formschlüssig zwischen den Rippen 42 der Freilaufkupplung 14 und den Rippen 44 des Drehmomentübertragungsringes 10 gehalten und füllen auch in Umfangsrichtung den Zwischenraum zwischen diesen Rippen vollständig aus.

Die Dämpfungskörper 38 bestehen aus einem Drahtgestrick, das nach dem Stricken in die gewünschte, etwa viertelzylindrische Form gepresst wurde.

Wenn der Drehmomentübertragungsring 10 durch den Keilriemen mit konstanter Geschwindigkeit angetrieben wird und dieser Drehmomentübertragungsring und die Welle der Lichtmaschine - und damit die Hülse 12 - exakt mit der gleichen Drehzahl laufen, wird das Drehmoment von den Rippen 44 über die Dämpfungskörper 38 auf die Rippen 42 und von dort auf die Freilaufkupplung 14 übertragen, deren Klemmrollen 22 sich in der Klemmposition befinden und somit das Drehmoment weiter auf die Hülse 12 übertragen. Im Fall von Gleichlaufschwankungen wird in den Phasen, in denen die Winkelgeschwindigkeit des Drehmomentübertragungsringes 10 kleiner ist als die der Hülse 12, der Freilauf wirksam, so dass die Hülse 12 nicht gebremst wird. In den Phasen, in denen die Winkelgeschwindigkeit des Drehmomentübertragungsringes größer ist als die der Hülse 12, werden die Dämpfungskörper 38 in Umfangsrichtung elastisch komprimiert, so dass die Drehmomentstöße abgefedert werden.

Die Verformungssteifigkeit der Dämpfungskörper 38 wird im gezeigten Beispiel noch zusätzlich dadurch erhöht, dass sich diese Dämpfungskörper mit ihrem inneren Umfang an dem Mitnehmerring 40 und mit ihrem äußeren Umfang am Drehmomentübertragungsring 10 abstützen, so dass die Stauchung in Umfangsrichtung nicht durch eine entsprechende Dickenzunahme in radialer Richtung kompensiert werden kann.

Da die Maschen des Drahtgestricks miteinander vielfältige Reibungspunkte bilden, wird die Energie der Drehschwingungen nicht als reine Federenergie wie z.B. bei Schraubendruckfedern, sondern durch die innere Reibung der Dämpfungskörper 38 zu einem gewissen Teil wirksam aufgezehrt und in Wärme umgesetzt. Insbesondere wird so die Anregung von Resonanz-Drehschwingungen verhindert. Die Freilaufkupplung 14 und alle nachgeschalteten Komponenten im Antriebsstrang für die Lichtmaschine und andere Nebenaggregate werden auf diese Weise wirksam gegen erhöhten Verschleiß geschützt.

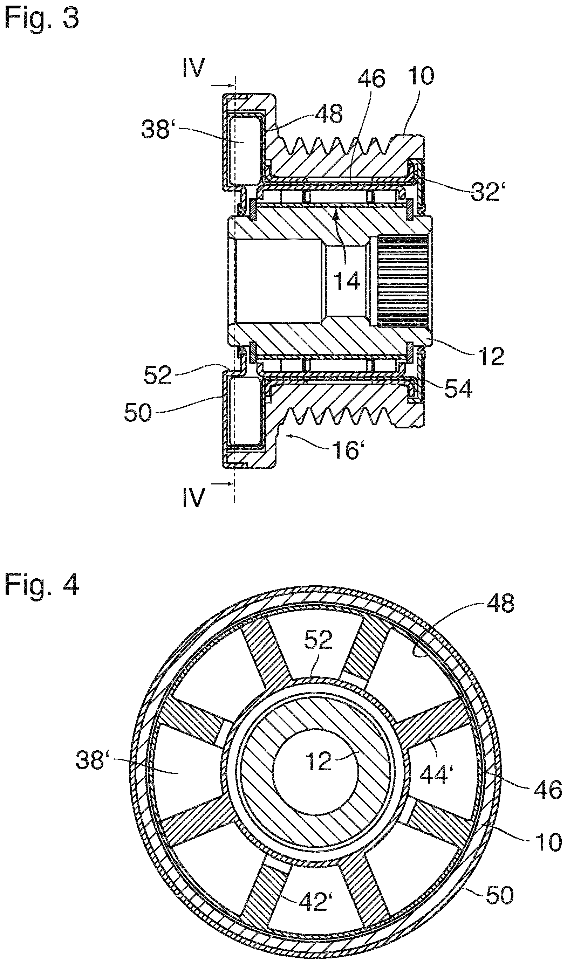

Figuren 3 und 4 zeigen eine abgewandelte Ausführungsform mit einem durch Dämpfungskörper 38' gebildeten Dämpfungselement 16'. Im Vergleich zu Figuren 1 und 2 sind die Dämpfungskörper 38' (hier vereinfacht als weiße Flächen dargestellt) axial nach außen (nach links in Fig. 3) in einen Bereich jenseits der Riemenprofilierung verschoben und zwischen Rippen 42', 44' des Drehmomentübertragungsrings und der Freilaufkupplung gehalten. Die Freilaufkupplung 14 weist eine fest auf dem Außenring sitzende Hülse 46 auf, die an einem axialen Ende einen erweiterten, durch die Rippen 42' radial unterteilten Aufnahmeraum 48 für die Dämpfungskörper 38' bildet. Der Drehmomentübertragungsring weist einen Deckel 50 mit einer Eintiefung 52 auf, der den Aufnahmeraum 48 am äußeren axialen Ende und am innern Umfang abschließt und die Rippen 44' bildet. Am entgegengesetzten Ende ist der Drehmomentübertragungsring durch einen Ringflansch 54 abgeschlossen, und im Bereich der Freilaufkupplung 14 stützt er sich über Gleitringe 32' auf der Hülse 46 ab.

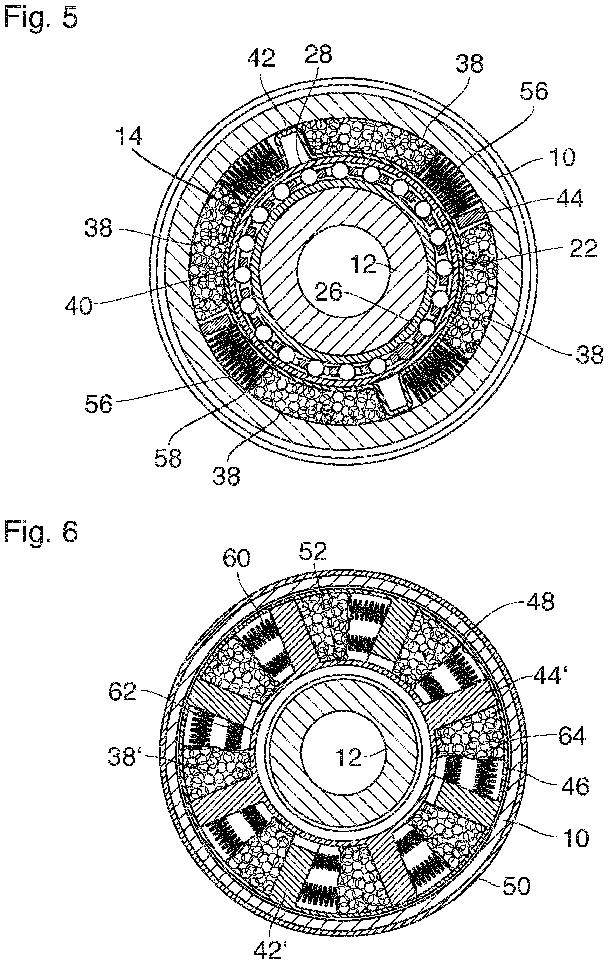

Fig. 5 illustriert eine Abwandlung des Ausführungsbeispiels nach Fig. 1 und 2, bei der elastische Dämpfungselemente 56 in der Form von Schraubenfedern jeweils zwischen einer der Rippen 44, 42 und dem Dämpfungskörper 38 eingefügt sind. Zumindest an den Enden jedes Dämpfungselements 56, das dem Maschenwerk des Dämpfungskörpers 38 zugewandt ist, ist eine Scheibe 58 eingefügt, durch die eine gleichmäßigere Verteilung der Kraft der Schraubenfeder auf das Maschenwerk erreicht wird.

Fig. 6 illustriert eine Abwandlung des Ausführungsbeispiels nach Fig. 3 und 4, bei der jeweils zwischen dem Dämpfungskörper 38' und einer der Rippen 42', 44' zwei elastische Dämpfungselemente 60 und 62' eingefügt sind. Beide Dämpfungselemente haben die Form von Schraubenfedern und sind in unterschiedlichen Radialpositionen angeordnet. Die Dämpfungskörper 38' sind hier jeweils auf der Seite, die den Dämpfungselementen 60, 62 zugewandt ist, derart geformt, dass sie Federsitze 64 für die Enden der Schraubenfedern bilden.

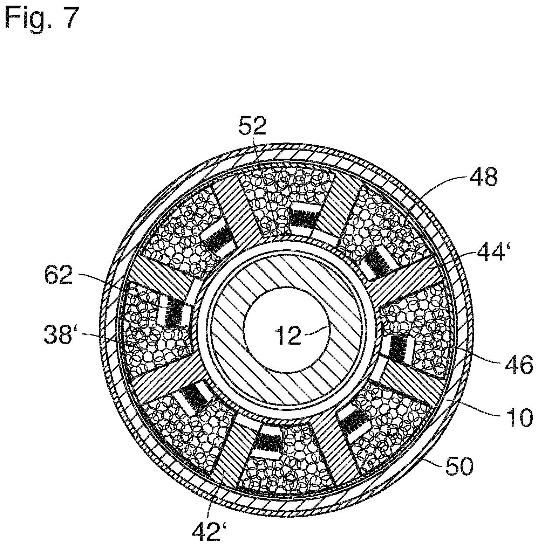

Fig. 7 illustriert eine weitere Abwandlung dieses Ausführungsbeispiels, bei dem jedem Dämpfungskörper 38' nur ein einziges Dämpfungselement 62 zugeordnet ist, das sich zwischen einem Teil des Dämpfungskörpers 38' und einer der Rippen 42', 44' abstützt. Ein anderer (in diesem Beispiel radial äußerer) Teil des aus Maschenwerk gebildeten Dämpfungskörpers 38' stützt sich unmittelbar an den Rippen 42' und 44' ab und bildet so einen parallelen zweiten Kraftübertragungspfad, der das elastische Dämpfungselement 62 umgeht.

In einer weiteren, nicht gezeigten Ausführungsform, könnte das aus Maschenwerk gebildete Dämpfungselement 38' auch so gestaltet sein, dass es keinen Federsitz für das elastische Dämpfungselement 62 bildet, sondern das Dämpfungselement 62 sich ebenfalls unmittelbar zwischen den Rippen 42' und 44' abstützt.

## Patentansprüche

1. Vorrichtung zur drehschwingungsgedämpften Übertragung eines Drehmoments, mit einem Drehmomentübertragungsring (10), einer Freilaufkupplung (14) und einem Dämpfungselement (16; 16'), das koaxial zu der Freilaufkupplung (14) angeordnet ist und mit dieser in Antriebsverbindung steht, **dadurch gekennzeichnet, dass** das Dämpfungselement (16; 16') mindestens einen Dämpfungskörper (38; 38') in der Form eines räumlichen Maschenwerkes aus Draht aufweist, der zwischen dem Drehmomentübertragungsring (10) und der Freilaufkupplung (14) angeordnet ist und in Umfangsrichtung an dem Drehmomentübertragungsring (10) und der Freilaufkupplung (14) abgestützt ist.

2. Vorrichtung nach Anspruch 1, bei der das Dämpfungselement (16; 16') in Umfangsrichtung formschlüssig zwischen radial von dem Drehmomentübertragungsring (10) einerseits und der Freilaufkupplung (14) andererseits vorspringenden Rippen (42, 44; 42', 44') gehalten ist.

3. Vorrichtung nach Anspruch 1 oder 2, bei der jeder Dämpfungskörper (38; 38') den ihm zugewiesenen Freiraum zwischen der Freilaufkupplung (14), dem Drehmomentübertragungsring (10) und den Rippen (42, 44) vollständig ausfüllt.

4. Vorrichtung nach einem der Ansprüche 1 bis 3, bei der das Dämpfungselement (16) die Freilaufkupplung (14) an ihrem äußeren Umfang umgibt.

5. Vorrichtung nach Anspruch 4, bei der der Drehmomentübertragungsring (10) eine Riemenscheibe ist, die das Dämpfungselement (16) an seinem äußeren Umfang umgibt.

6. Vorrichtung nach Anspruch 4 oder 5, bei der der Drehmomentübertragungsring (10) in radialer Richtung spielfrei auf der Freilaufkupplung (14) abstützt ist.

7. Vorrichtung nach Anspruch 6, bei der die starre Abstützung des Drehmomentübertragungsringes (10) durch an entgegengesetzten Enden des Dämpfungselements (16) angeordnete trogartige Blechringe (34) und Gleitlagerhülsen (32) erfolgt.

8. Vorrichtung nach einem der vorstehenden Ansprüche, bei der die Freilaufkupplung (14) mit mindestens einen Wälzlager kombiniert ist, dessen Wälzkörper (20) zwischen einem Innenring (26) und einem Außenring (28) der Freilaufkupplung (14) abrollen.

9. Vorrichtung nach einem der vorstehenden Ansprüche, bei der das Dämpfungselement (16; 16') durch mehrere getrennte Dämpfungskörper (38; 38') gebildet wird, die jeweils eine im Querschnitt ringsegmentartige Form haben.

10. Vorrichtung nach einem der vorstehenden Ansprüche, bei der das Dämpfungselement (16; 16') zusätzlich zu dem durch das Maschenwerk gebildeten Dämpfungskörper (38; 38') mindestens ein elastisches Dämpfungselement (56; 60, 62) in der Form einer Schraubenfeder, Tellerfeder einer Blattfeder oder eines Gummiblockes aufweist.

11. Vorrichtung nach Anspruch 10, bei der das elastische Dämpfungselement (56; 60) im Kraftfluss zwischen dem Drehmomentübertragungsring (10) und der Freilaufkupplung (14) in Reihe zu dem Dämpfungskörper (38; 38') angeordnet ist.

12. Vorrichtung nach Anspruch 10 oder 11, bei der der Dämpfungskörper (38') und das elastische Dämpfungselement (62) parallele Kraftübertragungspfade bilden.

## Claims

1. A device for transmission of a torque with torsional vibration damping, comprising a torque transmission ring (10), a sprag clutch (14), and a damping element (16; 16') which is arranged coaxially to said sprag clutch (14) and is in driving engagement therewith, the device being **characterized in that** the damping element (16; 16') has at least one damping body (38; 38') in the form of a three-dimensional wire meshwork, which is arranged between the torque transmission ring (10) and the sprag clutch (14) and is supported on the torque transmission ring (10) and the sprag clutch (14) in a circumferential direction.

2. The device according to claim 1, wherein the damping element (16; 16') is held between ribs (42, 44; 42', 44') projecting radially from the torque transmission ring (10) on the one hand and from the sprag clutch (14) on the other hand, with form-fit in circumferential direction.

3. The device according to claim 1 or 2, wherein each damping body (38; 38') is arranged to completely fill an associated space between the sprag clutch (14), the torque transmission ring (10) and the ribs (42, 44).

4. The device according to any of the claims 1 to 3, wherein the damping element (16) surrounds the sprag clutch (14) at its outer periphery.

5. The device according to claim 4, wherein the torque transmission ring (10) is a pulley which surrounds the damping element (16) at its outer periphery.

6. The device according to claim 4 or 5, wherein the torque transmission ring (10) is supported on the sprag clutch (14) without play in the radial direction.

7. The device according to claim 6, wherein the torque transmission ring (10) is rigidly supported by pot-shaped sheet metal rings (34) and slide bearing sleeves (32) disposed at opposite ends of the damping element (16).

8. The device according to any of the preceding claims, wherein the sprag clutch (14) is combined with at least one roller bearing having rollers (20) supported between an inner race (26) and an outer race (28) of the sprag clutch (14).

9. The device according to any of the preceding claims, wherein the damping element (16; 16') is formed by a plurality of separate damping bodies (38; 38') each of which has a cross-sectional shape in the form of a ring segment.

10. The device according to any of the preceding claims, wherein the damping element (16; 16') has, in addition to the damping body (38; 38') formed by the meshwork, at least one elastic damping element (56; 60, 62) in the form of one of: a helical spring, a dish spring, leaf spring, and rubber block.

11. The device according to claim 10, wherein the elastic damping element (56; 60) is arranged in series with the damping body (38; 38') in the flow of force between the torque transmission ring (10) and the sprag clutch (14).

12. The device according to claim 10 or 11, wherein the damping body (38') and the elastic damping element (62) form parallel force transmission paths.

## Revendications

1. Dispositif destiné à transmettre un couple avec un amortissement des vibrations en torsion, comportant une bague de transmission de couple (10), un accouplement à roue libre (14) et un élément d'amortissement (16 ; 16') agencé coaxialement à l'accouplement à roue libre (14) et en liaison d'entraînement avec celui-ci, **caractérisé en ce que** l'élément d'amortissement (16 ; 16') comporte au moins un corps d'amortissement (38 ; 38') ayant la forme d'un maillage spatial de fil, qui est agencé entre la bague de transmission de couple (10) et l'accouplement à roue libre (14) et est supporté par la bague de transmission de couple (10) et l'accouplement à roue libre (14) dans une direction circonférentielle.

2. Dispositif selon la revendication 1, dans lequel l'élément d'amortissement (16 ; 16') est maintenu dans une direction circonférentielle par complémentarité de formes entre des nervures (42, 44 ; 42', 44') faisant radialement saillie à partir de la bague de transmission de couple (10) d'une part et à partir de l'accouplement à roue libre (14) d'autre part.

3. Dispositif selon la revendication 1 ou 2, dans lequel chaque corps d'amortissement (38 ; 38') remplit entièrement l'espace libre associé à celui-ci entre l'accouplement à roue libre (14), la bague de transmission de couple (10) et les nervures (42, 44).

4. Dispositif selon l'une des revendications 1 à 3, dans lequel l'élément d'amortissement (16) entoure l'accouplement à roue libre (14) sur sa périphérie extérieure.

5. Dispositif selon la revendication 4, dans lequel la bague de transmission de couple (10) est une poulie qui entoure l'élément d'amortissement (16) sur sa périphérie extérieure.

6. Dispositif selon la revendication 4 ou 5, dans lequel la bague de transmission de couple (10) est supportée sur l'accouplement à roue libre (14) sans jeu dans une direction radiale.

7. Dispositif selon la revendication 6, dans lequel le support rigide de la bague de transmission de couple (10) est assuré par des bagues en tôle (34) en forme de cuvette et des douilles de palier lisse (32) à des extrémités opposées de l'élément d'amortissement (16) .

8. Dispositif selon l'une des revendications précédentes, dans lequel l'accouplement à roue libre (14) est combiné avec au moins un palier à roulement dont les éléments de roulement roulent entre une bague intérieure (26) et une bague extérieure (28) de l'accouplement à roue libre (14).

9. Dispositif selon l'une des revendications précédentes, dans lequel l'élément d'amortissement (16 ; 16') est formé par plusieurs corps d'amortissement (38 ; 38') séparés qui ont respectivement une forme analogue à un segment annulaire en coupe transversale.

10. Dispositif selon l'une des revendications précédentes, dans lequel l'élément d'amortissement (16 ; 16') comporte, en plus du corps d'amortissement (38 ; 38') formé par le maillage, au moins un élément d'amortissement élastique (56 ; 60, 62) ayant la forme d'un ressort hélicoïdal, d'un ressort Belleville, d'un ressort à lames ou d'un bloc de caoutchouc.

11. Dispositif selon la revendication 10, dans lequel l'élément d'amortissement élastique (56 ; 60) est agencé en série par rapport au corps d'amortissement (38 ; 38') dans un flux de force entre la bague de transmission de couple (10) et l'accouplement à roue libre (14).

12. Dispositif selon la revendication 10 ou 11, dans lequel le corps d'amortissement (38') et l'élément d'amortissement élastique (62) forment des trajets de transmission de force parallèles.
